# FASCICULE DE BREVET EUROPEEN

(11) **EP 2 780 295 B1**
(45) Date de publication et mention de la délivrance du brevet: **11.11.2015**
(21) Numéro de dépôt: 12795541.7
(22) Date de dépôt: 14.11.2012
(51) Int. Cl.: C03C 17/42

(54) **VITRAGE HYDROPHOBE**
Hydrophobe Verglasung
HYDROPHOBIC GLAZING

(30) Priorité: 16.11.2011 FR 1160419
(43) Date de publication de la demande: 24.09.2014
(73) Titulaire: Saint-Gobain Glass France, 92400 Courbevoie (FR)
(72) Inventeur: THOUMAZET, Claire, F-75002 Paris (FR); MELCHER, Martin, 52134 Herzogenrath (DE); HUIGNARD, Arnaud, F-60200 Huignard (FR); LANTE, Raphael, Marlboro, MA 01752 (US)
(74) Mandataire: Pöpping, Barbara
(86) Numéro de dépôt international: PCT/FR2012/052621
(87) Numéro de publication internationale: WO 2013/072622

(56) Documents cités:
- WO-A1-2010/079299
- FR-A1- 2 866 643

## Description

La présente invention concerne un procédé de préparation d'un vitrage hydrophobe ainsi qu'un vitrage hydrophobe, en particulier un pare-brise, obtenu par ce procédé.

Il existe sur le marché de nombreux produits en verre minéral présentant une surface hydrophobe obtenue par greffage covalent d'agents hydrophobes présentant généralement une chaîne siliconée ou perfluoroalkylée.

Ces produits en verre à caractère hydrophobe sont utilisés par exemple en tant que vitrages pour fenêtres, pour cabines de douche, ou pour vitrages automobiles.

La plupart des produits perdent toutefois progressivement leur caractère hydrophobe au bout d'un certain temps qui peut aller de quelques mois à quelques années. Cette perte d'hydrophobie est particulièrement rapide pour des vitrages, tels que des pare-brise, soumis à des sollicitations chimiques et physiques importantes, comme l'essuyage par des essuie-glaces, les changements de température, la pollution atmosphérique, la lumière du soleil, etc.

La demande internationale WO2010/125964 divulgue un vitrage hydrophobe constitué d'un substrat en verre minéral, d'une sous-couche d'accrochage à base d'un composé organométallique pouvant contenir de 0,3 à 50 % d'atomes de carbone, d'azote, de chlore et/ou de fluor. La sous-couche présente des fonctions capables de réagir avec les fonctions silyle d'un agent hydrophobe de type éther fluoré.

La demande internationale WO2010/079299 au nom de la Demanderesse, divulgue un procédé d'obtention d'un revêtement hydrophobe sur un substrat en verre comprenant la formation d'une sous-couche à base d'oxycarbure de silicium. Le paramètre déterminant pour la durabilité est la rugosité de la sous-couche d'accrochage, qui doit être au moins égale à 4 nm (rugosité RMS).

La société Central Glass Co. propose actuellement sous la dénomination commerciale Aquasplash^{®} des pare-brise hydrophobes avec une couche de surface constituée d'un mélange de fluorosilanes et de silicone. La Demanderesse a toutefois constaté que la durabilité de ces vitrages était inférieure à 3 ans.

Il n'existe ainsi jusqu'à présent aucune solution permettant de proposer des pare-brise conservant un caractère hydrophobe satisfaisant pendant au moins 3 ans.

Dans le cadre de ses recherches visant à améliorer le caractère hydrophobe des pare-brise et à le prolonger même au-delà de ces trois ans, la Demanderesse a constaté, avec une certaine surprise, que la composition chimique d'une couche d'accrochage en oxycarbure de silicium, et notamment la richesse en carbone d'une telle couche, utilisée ensuite pour le greffage covalent d'un agent hydrophobe, avait une influence significative et imprévue sur la longévité du revêtement hydrophobe greffé.

La Demanderesse a observé en particulier que, lorsque le rapport carbone/silicium (C/Si) dans une couche mince en SiOₓC_{y} était supérieur à 0,4 sur une profondeur importante de ladite couche, la perte de l'angle de contact d'une goutte d'eau désionisée était considérablement réduite par rapport à des couches n'atteignant pas ce rapport C/Si ou atteignant ce rapport de façon trop localisée, c'est-à-dire sur une petite fraction de leur profondeur seulement.

La Demanderesse a en outre constaté que l'on obtenait une proportion élevée de carbone sur une profondeur importante de la couche de SiOₓC_{y}, non pas en augmentant mais, de manière surprenante, en réduisant le flux d'éthylène (C₂H₄) par rapport au flux de silane (SiH₄) dans le procédé de dépôt chimique en phase vapeur (CVD, *chemical vapour deposition*) de la couche d'oxycarbure de silicium.

L'ensemble de ces découvertes a fait l'objet d'une demande de brevet séparée, déposée le même jour que la présente demande.

Les vitrages hydrophobes portant des sous-couches d'accrochage riches en carbone ainsi obtenus présentaient toutefois une sensibilité aux rayures élevée ce qui représente un inconvénient gênant, en particulier dans le cas de vitrages exposés à une abrasion assez importantes, comme par exemple des pare-brise.

Dans le cadre de ses recherches visant à optimiser encore davantage les vitrages hydrophobes, la Demanderesse a découvert qu'il était possible d'augmenter considérablement la résistance aux rayures de vitrages hydrophobes, en déposant, sur la première sous-couche en oxycarbure de silicium riche en carbone, une deuxième sous-couche de SiOC, plus pauvre en carbone ou exempte de carbone (autrement dit une couche de silice), sans que cela ne réduise de manière significative la longévité du revêtement hydrophobe greffé.

La conservation de cette longévité du revêtement hydrophobe n'était en effet nullement prévisible au vu des résultats antérieurs qui avaient montré qu'elle dépendait de la composition chimique, et notamment de la teneur en carbone, de la couche d'accrochage. L'homme du métier avait donc toutes les raisons de penser qu'en interposant une couche mince entre la couche de SiOC riche en carbone et l'agent hydrophobe, il réduirait la longévité du revêtement hydrophobe.

La présente invention a par conséquent pour objet un procédé de fabrication d'un vitrage hydrophobe comprenant les étapes successives suivantes :
(a) formation d'une couche d'oxycarbure de silicium (SiOₓC_{y}) riche en carbone à la surface d'un substrat en verre minéral, par dépôt chimique en phase vapeur (CVD) sur au moins une partie de la surface dudit substrat par mise en contact de ladite surface avec un flux de gaz réactifs contenant de l'éthylène (C₂H₄), du silane (SiH₄) et du dioxyde de carbone (CO₂), à une température comprise entre 600 °C et 680 °C, de préférence entre 610 °C et 660 °C, le rapport volumique d'éthylène/silane (C₂H₄/SiH₄) au cours de l'étape (a) étant inférieur ou égal à 3,3,
(b) formation d'une couche de SiO₂ sur la couche d'oxycarbure de silicium déposée à l'étape (a),
(c) recuit et/ou mise en forme du substrat obtenu à l'issue de l'étape (b), à une température comprise entre 580 °C et 700 °C, de préférence entre 600 °C et 680 °C,
(d) activation de la couche de silice par traitement plasma ou traitement chimique acide ou basique, et
(e) greffage, par liaison covalente, d'un agent hydrophobe fluoré à la surface de la couche de silice.

La présente invention a en outre pour objet un vitrage hydrophobe susceptible d'être obtenu par un tel procédé.

Le procédé selon l'invention comprend les étapes successives (a), (b), (c), (d) et (e).

La première étape du procédé selon l'invention (étape (a)) est de préférence mise en oeuvre sur du verre *float* à l'intérieur du four sur bain d'étain ou immédiatement après la sortie du four. Un mode de réalisation particulièrement avantageux consiste à effectuer le dépôt par CVD à l'intérieur du four, où il est relativement facile de créer une atmosphère confinée indispensable à un contrôle satisfaisant de la composition chimique du mélange réactif et de la couche déposée.

Le mélange de gaz réactifs est introduit dans le four par une buse dont la largeur couvre de préférence au moins 90 % de la largeur du ruban de verre défilant dans le four. Les gaz réactifs (C₂H₄, SiH₄, CO₂) sont généralement mélangés avec un gaz porteur, ou gaz diluant, inerte tel que l'azote (N₂).

Le dépôt de couches minces d'oxycarbure de silicium par CVD est connu et l'homme du métier saura ajuster les débits des gaz réactifs en fonction de la vitesse de défilement du verre, des températures du four, et de l'épaisseur des couches qu'il souhaite obtenir.

Dans la présente invention, les conditions expérimentales de l'étape (a) (vitesse de défilement du ruban, débit des gaz réactifs etc.) sont ajustées de préférence de manière à ce que l'épaisseur de la couche de SiOₓC_{y} déposée soit comprise entre 10 et 200 nm, en particulier entre 20 et 100 nm, et de manière particulièrement préférée entre 40 et 70 nm.

Les températures indiquées ci-avant pour l'étape (a) sont celles du bain d'étain à proximité immédiate (moins de 20 cm) de la buse de dépôt par laquelle arrive le mélange de gaz réactifs.

Le rapport du gaz oxydant (CO₂) au silane (SiH₄) est généralement compris entre 1 et 50, de préférence entre 1,5 et 10 et en particulier entre 2 et 6.

Comme expliqué ci-avant la Demanderesse a découvert que, de manière assez surprenante, on obtenait des couches d'oxycarbure de silicium riches en carbone en utilisant pour l'étape (a) un rapport volumique d'éthylène/silane (C₂H₄/SiH₄) relativement bas, à savoir inférieur ou égal à 3,3. Ce rapport est de préférence compris entre 1 et 3,3 et en particulier entre 1,5 et 3,3.

En effet, pour des rapports volumiques C₂H₄/SiH₄ plus élevés, en particulier supérieurs à 3,4, la teneur en carbone de la sous-couche d'oxycarbure de silicium n'est plus suffisante pour aboutir, après greffage d'un agent hydrophobe, à des propriétés hydrophobes durables. La découverte du lien entre le rapport volumique C₂H₄/SiH₄ et la teneur en carbone des couches SiOC obtenues, ainsi que l'incidence sur la durabilité des couches hydrophobes greffées a fait l'objet d'une demande séparée, déposée le même jour que la présente demande.

Il existe de nombreuses méthodes pour déposer des couches minces de silice à la surface d'un substrat en verre. On peut citer à titre d'exemple le dépôt chimique en phase vapeur (CVD) utilisant en tant que précurseur le tétraéthoxysilane (TEOS), le dépôt chimique en phase vapeur assisté par plasma (PECVD), la pulvérisation cathodique sous vide soutenue par un champ magnétique (pulvérisation magnétron) ou une combinaison de ces deux dernières techniques (PECVD-magnétron).

La couche de silice, déposée à l'étape (b) a de préférence une épaisseur comprise entre 3 et 100 nm, en particulier entre 5 et 50 nm.

Les couches formées aux étapes (a) et (b) sont des couches denses, non poreuses, ayant un indice de réfraction compris entre 1,45 et 1,9.

Après dépôt de la couche de silice (étape (b)), le substrat couvert des deux couches minces est refroidi, généralement jusqu'à température ambiante, puis il est soumis à une étape de recuit et/ou de mise en forme, par exemple un bombage.

Le produit obtenu à l'issue de l'étape (c) de recuit ne présente bien entendu pas encore de propriétés hydrophobes. Pour le rendre hydrophobe, il est nécessaire d'activer la surface au moyen d'un traitement plasma ou d'une hydrolyse basique ou acide - de manière à rendre accessible un grand nombre de groupements SiOH à la surface de la couche d'accrochage - puis d'appliquer dans un délai court, ne dépassant de préférence pas quelques minutes, un agent hydrophobe capable de réagir avec les fonctions silanol activées.

L'activation peut être mise en oeuvre dans des installations sous vide ou à pression atmosphérique, par exemple dans un réacteur RF capacitif à plaques parallèles. Le traitement plasma ne modifie que très peu, voire pas du tout, la morphologie physique de la surface qui conserve notamment sa rugosité. Le gaz utilisé est généralement choisi dans le groupe constitué de N₂, O₂, H₂O et d'un mélange de ces gaz. La Demanderesse a obtenu de bons résultats en utilisant pour l'étape d'activation par plasma un mélange de N₂ et de H₂O obtenu par barbotage d'un flux d'azote dans de l'eau désionisée à température ambiante. Le mélange eau/azote contient jusqu'à 3 % en volume d'eau. La pression de travail est régulée à une valeur comprise entre 75 et 300 mtorr, la puissance du réacteur entre 150 et 5000 W et la durée de l'étape d'activation est généralement comprise entre 1 minute et environ 15 minutes, typiquement entre 5 et 10 minutes.

Lorsque l'activation est mise en oeuvre par voie liquide, on met la surface de la couche pendant au moins quelques secondes, voire quelques minutes, en contact avec une solution d'une base forte à un pH > 10 ou une solution d'un acide fort présentant un pH < 4.

L'étape d'activation est de préférence effectuée immédiatement avant l'étape (e) de greffage covalent d'un agent hydrophobe. En effet, les fonctions silanol créées par l'activation sont susceptibles de réagir entre elles ou avec des composants de l'atmosphère et deviennent alors de nouveau indisponibles pour la fixation de l'agent hydrophobe.

Dans un mode de réalisation préféré du procédé de l'invention, l'étape (e) est mise en oeuvre moins de 30 minutes, de préférence moins de 15 minutes et en particulier moins de 5 minutes après la fin de l'étape d'activation (étape (d)).

L'étape d'hydrophobisation peut en principe se faire par n'importe quelle technique connue, telle que l'immersion, la pulvérisation, la centrifugation, le dépôt par plasma atmosphérique ou sous vide, ou le chiffonnage (application d'une solution de l'agent hydrophobe au moyen d'un chiffon imbibé).

On peut utiliser dans la présente invention en principe n'importe quel agent hydrophobe capable de former des liaisons covalentes avec les groupes silanol de la couche d'oxycarbure de silicium. De tels agents sont connus et sont décrits notamment dans les demandes EP 0 492 417, EP 0 492 545, EP 0 672 779 et WO 2007/012779. Ces documents décrivent par ailleurs différents procédés d'application de ces réactifs d'hydrophobisation.

Les agents hydrophobes utilisés dans la présente invention sont de préférence choisis parmi les fluoroalkylsilanes de formule

F₃C-(CF₂)ₘ-(CH₂)ₙ-Si(X)₃₋ₚ(R)ₚ

où
m = 0 à 15, de préférence 5 à 9,
n = 1 à 5, de préférence n = 2,
p = 0, 1 ou 2, de préférence 0 ou 1, en particulier 0,
R est un groupe alkyle en C₁₋₈ ou un atome d'hydrogène,
X est un groupement hydrolysable, de préférence un atome d'halogène ou un groupe alcoxy en C₁₋₄.

On peut également envisager l'utilisation de composés de formule

F₃C-(CF₂-CF(CF₃)-O)ₘ-(CH₂-CH₂)ₙ-Si(X)₃₋ₚ(R)ₚ

ou de formule

F₃C-(CF₂-CF₂-CF₂-O)ₘ-(CH₂-CH₂)ₙ-Si(X)₃₋ₚ(R)ₚ

où m = 2 à 30, et n = 1 à 3, de préférence n = 1 et p, X et R ont la signification indiquée ci-dessus.

Les réactifs hydrophobes sont appliqués de préférence sous forme d'une solution hydro-alcoolique acide préparée extemporanément, par exemple une solution dans l'éthanol ou l'isopropanol contenant généralement moins de 15 % d'eau acidifiée, par exemple, par de l'acide chlorhydrique.

Cette solution d'hydrophobisation a de préférence une concentration en agent hydrophobe comprise entre 1 et 5 % en poids. Elle est appliquée sur le produit semi-fini activé au moyen d'un chiffon imbibé de ladite solution. La durée de cette mise en contact de l'agent d'hydrophobe avec la surface activée est de préférence comprise entre 5 et 60 minutes, de préférence entre 10 et 30 minutes. L'excédent d'agent hydrophobe peut ensuite être éliminé par un rinçage à l'alcool.

Le vitrage hydrophobe de la présente invention est de préférence un vitrage de véhicule automobile, en particulier un pare-brise.

Ses propriétés hydrophobes durables peuvent toutefois également être intéressantes dans d'autres domaines d'utilisation, par exemple, dans le domaine de l'aviation (pare-brise d'avions), du bâtiment (fenêtres, portes vitrées), du mobilier (miroirs, tablettes de rangements, tablettes pour appareils électroménagers, éléments de cabine de douche, cloisons), du mobilier urbain (arrêts d'autobus), des écrans d'affichage (télévision, ordinateurs, écrans tactiles), etc.

Les exemples ci-après illustrent la présente invention sans toutefois en limiter la portée qui est définie uniquement par les revendications.

### Exemples

On prépare deux vitrages hydrophobes selon l'invention par le procédé suivant :
a) dépôt d'une couche d'oxycarbure de silicium riche en carbone par CVD (C₂H₂, SiH₄, CO₂, diluant N₂) utilisant une buse d'une largeur de 3,3 m sur un substrat en verre *float* clair à une température de 650 °C (température du bain d'étain à proximité immédiate de la buse) ; la largeur du ruban est de 3,6 m, son épaisseur de 2,8 mm et sa vitesse de défilement de 16,7m/min ; les débits des gaz réactifs sont les suivants : SiH₄ (20,2 nL/min), C₂H₄ (35 nL/min), CO₂ (30 nL/min) dans un diluant N₂ ; rapport volumique C₂H₂/SiH₄ = 1,73 ;
b) dépôt d'une couche de silice par pulvérisation magnétron ayant une épaisseur de 5 nm ou 15 nm ;
c) recuit à une température de 640 °C pendant 8 minutes,
d) activation par un plasma H₂O/N₂, et
e) greffage d'un agent hydrophobe par chiffonnage d'une solution contenant 2 % de CF₃-(CF₂)₇-(CH₂)₂-Si(OEt) dans un mélange d'isopropanol et d'eau acidifiée (0,3 NHCl) (90/10).

On prépare par ailleurs un vitrage hydrophobe comparatif par un procédé comportant les étapes (a), (c), (d) et (f), mais qui ne comprend pas le dépôt d'une couche de silice (étape (b)).

L'évaluation du caractère hydrophobe des produits finis se fait par mesure de l'angle de contact (θᵢₙᵢₜᵢₐₗ) d'une goutte d'eau déionisée au moyen d'un tensiomètre automatique KRÜSS. Plus l'angle de contact est élevé, plus le produit fini est hydrophobe.

L'ensemble des échantillons est ensuite soumis à un vieillissement accéléré au cours duquel l'échantillon est soumis à des cycles de pluie artificielle, séchage, illumination et essuyage par des balais d'essuie-glaces. La durée totale du vieillissement accéléré est de 32 000 minutes.

A la fin de ce vieillissement accéléré, on mesure de nouveau l'angle de contact (θ_{final}) qui diminue pour l'ensemble des échantillons. La perte de l'angle de contact est égale à θᵢₙᵢₜᵢₐₗ - θ_{final}.

Le tableau 1 présente en outre les résultats d'un essai de résistance aux rayures (*Erichsen Scratch Test*) qui consiste à appliquer une force constante (*via* une pointe normalisée) à un échantillon animé d'un mouvement de rotation. On note la force (F) exprimée en Newton (N) correspondant à l'apparition d'une rayure visible à l'oeil nu.

**Tableau 1**

| Exemple | SiH₄ (nLI/min) | C₂H₄ (nL/min) | CO₂ (nL/min) | Epaisseur couche SiO₂ | C₂H₄/SiH ₄ | θᵢₙᵢₜᵢₐₗ | θᵢₙᵢₜᵢₐₗ - θ_{final} | F (N) |
|---|---|---|---|---|---|---|---|---|
| 1 (comp.) | 20,2 | 35 | 30 | - | 1,73 | 116 | 14° | 0,5 |
| 2 (invention) | 20,2 | 35 | 30 | 5 nm | 1,73 | 117 | 11° | > 2 |
| 3 (invention) | 20,2 | 35 | 30 | 15 nm | 1,73 | 119 | 13° | > 2 |

Ces résultats montrent que la présence d'une mince couche de SiO₂ permet d'améliorer significativement la résistance aux rayures des vitrages hydrophobes sans que cela n'aboutisse à une dégradation de la durabilité du caractère hydrophobe des vitrages. La perte de l'angle de contact est en effet sensiblement identique pour les trois exemples.

## Revendications

1. Procédé de fabrication d'un vitrage hydrophobe comprenant les étapes successives suivantes :
(a) formation d'une couche d'oxycarbure de silicium (SiOₓC_{y}) riche en carbone à la surface d'un substrat en verre minéral, par dépôt chimique en phase vapeur (CVD) sur au moins une partie de la surface dudit substrat par mise en contact de ladite surface avec un flux de gaz réactifs contenant de l'éthylène (C₂H₄), du silane (SiH₄) et du dioxyde de carbone (CO₂), à une température comprise entre 600 °C et 680 °C, de préférence entre 610 °C et 660 °C, le rapport volumique d'éthylène/silane (C₂H₄/SiH₄) au cours de l'étape (a) étant inférieur ou égal à 3,3,
(b) formation d'une couche de SiO₂ sur la couche d'oxycarbure de silicium déposée à l'étape (a),
(c) recuit et/ou mise en forme du substrat obtenu à l'issue de l'étape (b), à une température comprise entre 580 °C et 700 °C, de préférence entre 600 °C et 680 °C,
(d) activation de la couche de silice par traitement plasma ou traitement chimique acide ou basique, et
(e) greffage, par liaison covalente, d'un agent hydrophobe fluoré à la surface de la couche de silice.

2. Procédé selon la revendication 1, **caractérisé par le fait que** l'étape (a) est mise en oeuvre sur du verre *float* à l'intérieur du four sur bain d'étain ou immédiatement après la sortie du four, de préférence à l'intérieur du four.

3. Procédé selon la revendication 1 ou 2, **caractérisé par le fait que** la couche de SiO₂ à l'étape (b) est formée par dépôt chimique en phase vapeur (CVD) utilisant en tant que précurseur le tétraéthoxysilane (TEOS), dépôt chimique en phase vapeur assisté par plasma (PECVD), pulvérisation cathodique sous vide soutenue par un champ magnétique (pulvérisation magnétron) ou une combinaison de ces deux dernières techniques (PECVD-magnétron).

4. Procédé selon l'une quelconque des revendications précédentes, **caractérisé par le fait que** les conditions de l'étape (a) sont telles que la couche de SiOₓC_{y} déposée présente une épaisseur comprise entre 10 et 200 nm, de préférence entre 20 et 100 nm, en particulier entre 40 et 70 nm.

5. Procédé selon l'une quelconque des revendications précédentes, **caractérisé par le fait que** la couche de silice, déposée à l'étape (b), a une épaisseur comprise entre 3 et 100 nm, de préférence entre 5 et 50 nm.

6. Procédé selon l'une quelconque des revendications précédentes, **caractérisé par le fait que** l'agent hydrophobe fluoré greffé à l'étape (d) est choisi parmi les fluoroalkylsilanes de formule
F₃C-(CF₂)ₘ-(CH₂)ₙ-Si(X)₃₋ₚ(R)ₚ
où
m = 0 à 15, de préférence 5 à 9,
n = 1 à 5, de préférence n = 2,
p = 0, 1 ou 2, de préférence 0 ou 1, en particulier 0,
R est un groupe alkyle en C₁₋₈ ou un atome d'hydrogène,
X est un groupement hydrolysable, de préférence un atome d'halogène ou un groupe alcoxy en C₁₋₄.

7. Procédé selon l'une quelconque des revendications précédentes, **caractérisé par le fait que** l'agent hydrophobe est appliqué sous forme d'une solution hydro-alcoolique acide, de préférence au moyen d'un chiffon imbibé de ladite solution.

8. Vitrage hydrophobe susceptible d'être obtenu par un procédé selon l'une quelconque des revendications précédentes.

9. Vitrage hydrophobe selon la revendication 8, **caractérisé par le fait qu'**il s'agit d'un vitrage automobile, de préférence d'un pare-brise.

## Patentansprüche

1. Verfahren zur Herstellung einer wasserabweisenden Verglasung, umfassend die folgenden aufeinanderfolgenden Schritte:
(a) Bildung einer kohlenstoffreichen Schicht aus Siliziumoxikarbid (Si-OₓC_{y}) an der Oberfläche eines Substrats aus mineralischem Glas, durch chemische Gasphasenabscheidung (CVD) auf wenigstens einem Teil der Oberfläche des Substrats durch Inkontaktbringen der Oberfläche mit einem Ethylen (C₂H₄), Silan (SiH₄) und Kohlendioxid (CO₂) enthaltenden reaktiven Gasstrom, bei einer Temperatur im Bereich zwischen 600 °C und 680 °C, vorzugsweise zwischen 610 °C und 660 °C, wobei das Volumenverhältnis von Ethylen/Silan (C₂H₄/SiH₄) im Laufe des Schrittes (a) kleiner als oder gleich 3,3 ist,
(b) Bildung einer SiO₂-Schicht auf der bei Schritt (a) abgeschiedenen Siliziumoxikarbid-Schicht,
(c) Spannungsfreimachen und/oder Informbringen des am Ende des Schrittes (b) erhaltenen Substrats, bei einer Temperatur im Bereich zwischen 580 °C und 700 °C, vorzugsweise zwischen 600 °C und 680 °C,
(d) Aktivieren der Siliziumdioxid-Schicht durch Plasmabehandlung oder saure oder basische chemische Behandlung, und
(e) Pfropfen eines wasserabweisenden fluorierten Mittels durch kovalente Bindung an der Oberfläche der Siliziumdioxid-Schicht.

2. Verfahren nach Anspruch 1, **dadurch gekennzeichnet, dass** Schritt (a) auf Floatglas innerhalb des Ofens auf Zinnbad oder unverzüglich nach dem Austritt aus dem Ofen, vorzugsweise innerhalb des Ofens durchgeführt wird.

3. Verfahren nach Anspruch 1 oder 2, **dadurch gekennzeichnet, dass** die SiO₂-Schicht bei Schritt (b) durch chemische Gasphasenabscheidung (CVD), die als Vorläufer Tetraethoxysilan (TEOS) verwendet, plasmaunterstützte chemische Gasphasenabscheidung (PECVD), magnetfeldunterstütze Kathodenzerstäubung im Vakuum (Magnetron-Sputtern) oder eine Kombination aus diesen letzten beiden Techniken (PECVD-Magnetron) gebildet wird.

4. Verfahren nach einem der vorhergehenden Ansprüche, **dadurch gekennzeichnet, dass** die Bedingungen des Schrittes (a) derart sind, dass die abgeschiedene SiOₓC_{y}-Schicht eine Dicke im Bereich zwischen 10 und 200 nm, vorzugsweise zwischen 20 und 100 nm, insbesondere zwischen 40 und 70 nm aufweist.

5. Verfahren nach einem der vorhergehenden Ansprüche, **dadurch gekennzeichnet, dass** die bei Schritt (b) abgeschiedene Siliziumdioxid-Schicht eine Dicke im Bereich zwischen 3 und 100 nm, vorzugsweise zwischen 5 und 50 nm aufweist.

6. Verfahren nach einem der vorhergehenden Ansprüche, **dadurch gekennzeichnet, dass** das bei Schritt (d) aufgepfropfte wasserabweisende fluorierte Mittel ausgewählt ist aus den Fluoralkylsilanen der Formel
F₃C-(CF₂)ₘ-(CH₂)ₙ-Si(X)₃₋ₚ(R)ₚ
worin
m = 0 bis 15, vorzugsweise 5 bis 9,
n = 1 bis 5, vorzugsweise n = 2,
p = 0, 1 oder 2, vorzugsweise 0 oder 1, insbesondere 0,
R eine C₁₋₈-Alkylgruppe oder ein Wasserstoffatom ist,
X eine hydrolysierbare Gruppe, vorzugsweise ein Halogenatom oder eine C₁₋₄-Alkoxygruppe ist.

7. Verfahren nach einem der vorhergehenden Ansprüche, **dadurch gekennzeichnet, dass** das wasserabweisende Mittel in Form einer sauren, hydroalkoholischen Lösung, vorzugsweise mittels eines mit der Lösung getränkten Lappens aufgetragen wird.

8. Wasserabweisende Verglasung, die geeignet ist, durch ein Verfahren nach einem der vorhergehenden Ansprüche erhalten zu werden.

9. Wasserabweisende Verglasung nach Anspruch 8, **dadurch gekennzeichnet, dass** es sich um eine Fahrzeugverglasung, vorzugsweise um eine Windschutzscheibe handelt.

## Claims

1. A process for the manufacture of a hydrophobic glazing comprising the following successive stages:
(a) formation of a carbon-rich silicon oxycarbide (SiOₓC_{y}) layer at the surface of a substrate made of mineral glass by chemical vapor deposition (CVD) over at least a portion of the surface of said substrate by bringing said surface into contact with a stream of reactive gases comprising ethylene (C₂H₄), silane (SiH₄) and carbon dioxide (CO₂) at a temperature of between 600°C and 680°C, preferably between 610°C and 660°C, the ethylene/silane (C₂H₄/SiH₄) ratio by volume during stage (a) being less than or equal to 3.3,
(b) formation of an SiO₂ layer on the silicon oxycarbide layer deposited in stage (a),
(c) annealing and/or shaping the substrate obtained on conclusion of stage (b) at a temperature of between 580°C and 700°C, preferably between 600°C and 680°C,
(d) activation of the silica layer by plasma treatment or acidic or basic chemical treatment and
(e) grafting, by covalent bonding, a fluorinated hydrophobic agent to the surface of the silica layer.

2. The process as claimed in claim 1, **characterized in that** stage (a) is carried out on float glass inside the furnace on the tin bath or immediately after exiting from the furnace, preferably inside the furnace.

3. The process as claimed in claim 1 or 2, **characterized in that** the SiO₂ layer in stage (b) is formed by chemical vapor deposition (CVD) using, as precursor, tetraethoxysilane (TEOS), plasma-enhanced chemical vapor deposition (PECVD), vacuum cathode sputtering supported by a magnetic field (magnetron sputtering) or a combination of these last two techniques (magnetron-PECVD).

4. The process as claimed in any one of the preceding claims, **characterized in that** the conditions of stage (a) are such that the deposited SiOₓC_{y} layer exhibits a thickness of between 10 and 200 nm, preferably between 20 and 100 nm, in particular between 40 and 70 nm.

5. The process as claimed in any one of the preceding claims, **characterized in that** the silica layer, deposited in stage (b), has a thickness of between 3 and 100 nm, preferably between 5 and 50 nm.

6. The process as claimed in any one of the preceding claims, **characterized in that** the fluorinated hydrophobic agent grafted in stage (d) is chosen from fluoroalkylsilanes of formula:
F₃C-(CF₂)ₘ-(CH₂)ₙ-S1(X)₃₋ₚ(R)ₚ
where:
m = 0 to 15, preferably 5 to 9,
n = 1 to 5, preferably n = 2,
p = 0, 1 or 2, preferably 0 or 1, in particular 0,
R is a C₁₋₈ alkyl group or a hydrogen atom,
X is a hydrolyzable group, preferably a halogen atom or a C₁₋₄ alkoxy group.

7. The process as claimed in any one of the preceding claims, **characterized in that** the hydrophobic agent is applied in the form of an acidic aqueous/alcoholic solution, preferably using a rag impregnated with said solution.

8. A hydrophobic glazing obtainable by a process as claimed in any one of the preceding claims.

9. The hydrophobic glazing as claimed in claim 8, **characterized in that** it is a motor vehicle glazing, preferably a windshield.
